# EUROPÄISCHE PATENTSCHRIFT

(11) **EP 1 172 171 B1**
(45) Veröffentlichungstag und Bekanntmachung des Hinweises auf die Patenterteilung: **04.08.2004**
(21) Anmeldenummer: 01106986.1
(22) Anmeldetag: 21.03.2001
(51) Int. Cl.: B23Q 1/03

(54) **Pressvorrichtung zur mehrseitigen Beschichtung von Werkstücken, insbesondere Möbelteilen**
Press device for coating of workpieces, in particular furniture elements
Dispositif de pressage revêtement de pièces, en particulier d'éléments de meubles

(30) Priorität: 10.07.2000 DE 10033246
(43) Veröffentlichungstag der Anmeldung: 16.01.2002
(73) Patentinhaber: Robert Bürkle GmbH, 72250 Freudenstadt (DE)
(72) Erfinder: Huber, Reinhard, 72250 Freudenstadt-Dietersweiler (DE)
(74) Vertreter: Brommer, Hans Joachim, Dr.-Ing.

(56) Entgegenhaltungen:
- EP-A- 0 979 707
- DE-A- 19 611 754
- DE-U- 29 707 883

## Beschreibung

Die Erfindung betrifft eine Pressvorrichtung zur mehrseitigen Beschichtung von Werkstücken, insbesondere von plattenförmigen Möbelteilen an deren Oberseite und Seitenflächen, wobei die Werkstücke auf einem Auflagersystem nebeneinander liegen, das eine Vielzahl rasterartig verteilter Auflagerbolzen aufweist, die zwischen einer Passivposition ohne Kontakt mit den Werkstücken und einer die Werkstücke tragenden Beschichtungsposition verstellbar sind. Die Erfindung betrifft ferner eine entnehmbare Palette.

Hauptanwendungsfall der Erfindung ist das Beschichten dreidimensionaler Möbelteile, die nicht nur an ihrer Front, sondern auch an den umlaufenden Seitenflächen mit einer Kunststoff-Folie, einem Furnier oder dergleichen beschichtet werden sollen. Nachfolgend wird nur noch von einer Folie gesprochen, ohne dass damit eine Beschränkung der Erfindung gemeint ist. Das Beschichten erfolgt durch Anwendung von Wärme und Druck in einer Presse. Damit deren Kapazität optimal genutzt werden kann, werden meist zahlreiche Werkstücke gleichzeitig in einer gemeinsamen Palette dem Auflagersystem der Presse zugeführt und dort gemeinsam beschichtet. Nach dem Verlassen der Presse werden die Werkstücke dann durch Ausschneiden aus der zusammenhängenden Folie vereinzelt.

Damit die Kunststofffolie nicht nur an der Oberseite der Werkstücke, sondern auch an den davon zurückspringenden Seitenflächen, insbesondere an deren unteren Rand, gut angelegt werden kann, müssen die Werkstücke von ihrer Unterlage distanziert werden. Dies geschieht meist durch Auflagerbolzen in Form von Hubbolzen, die in eine obere Position verfahren und dadurch die Werkstücke anheben. Wesentlich dabei ist, dass nur solche Hubbolzen in die obere Beschichtungsposition angehoben werden, die vollständig von einem Werkstück überdeckt sind, während die nicht bzw. nicht vollständig belegten Hubbolzen in der unteren Ruheposition verbleiben, damit der Beschichtungsvorgang an den seitlichen Randflächen nicht beeinträchtigt wird.

Unabhängig davon ist es auch störend, wenn freistehende unbelegte Auflagebolzen während des Beschichtungsvorganges in ihrer oberen Position stehen, weil diese Bolzen dann auch von der Folie oder dergleichen beschichtet werden und die Folie dann umständlich und zeitraubend wieder abgelöst werden muss.

Im Stand der Technik sind bereits zahlreiche Pressvorrichtungen beschrieben, die der vorerwähnten Problematik Rechnung tragen. Beispielhaft wird auf die DE-A-197 18 561 und 198 36 219 derselben Anmelderin verwiesen.

In der Mehrzahl der Anwendungsfälle arbeiten diese Pressvorrichtungen absolut einwandfrei Vereinzelt ergeben sich aber noch Qualitätsprobleme bei der Beschichtung der Eckbereiche. Untersuchungen der Anmelderin haben ergeben, dass es hier unter ungünstigen Umständen lokal zu einem Überdehnen und zum Reißen der Folie kommen kann.

Der vorliegenden Erfindung liegt deshalb die Aufgabe zugrunde, hier Abhilfe zu schaffen, das heißt, auch bei ungünstigen Bedingungen eine zuverlässige und dauerhafte Beschichtung insbesondere an den Seitenkanten und Ecken zu gewährleisten.

Diese Aufgabe wird bei der Pressvorrichtung erfindungsgemäß dadurch gelöst, dass oberhalb der Auflagerbolzen eine elastische Membran angeordnet ist, auf die die Werkstücke auflegbar sind.

Diese Aufgabe wird bei der Palette erfindungsgemäß dadurch gelöst, dass die Palette oberhalb ihrer Lochtafel eine elastische Membran aufweist, auf die die Werkstücke auflegbar sind.

Die Erfindung beruht auf der Erkenntnis, dass die beschriebene Problematik nicht nur vom Ausmaß der Dehnung, sondern auch von der Dehnungsgeschwindigkeit der Folie beeinflusst wird. Diese Dehnungsgeschwindigkeit wird nun erfindungsgemäß durch die zwischengelegte elastische Membran verringert, denn im Randbereich der Werkstücke, wo die Folie in den Zwischenraum nicht nur zwischen benachbarten Werkstücken, sondern auch zwischen benachbarten Auflagerbolzen hineingezogen wird, fungiert die Membran als Abstützung. Man kann sagen, dass die Membran in diesen Bereichen als Dehnungsbremse und Führung für die Folie wirkt.

Ein anderer wichtiger Aspekt der Erfindung besteht darin, dass die Membran einen direkten Kontakt der erhitzten Folie mit der kalten Unterlage der Werkstücke, insbesondere der Palette, ausschließt; die Folie kann daher in den stark gedehnten Bereichen nicht abgeschreckt werden und behält ihre elastischen Eigenschaften in höherem Maße als bisher.

Damit die Membran nicht bei jedem Beschichtungsvorgang neu ausgerichtet werden muss, empfiehlt es sich, dass sie an der Pressvorrichtung oder einer entnehmbaren Palette mit rasterartiger Lochtafel befestigt ist. Dabei genügt eine geringfügige Vorspannung, damit eine Faltenbildung der Membran vermieden wird.

Besonders günstig ist es, die Membran an ihrem Rand an dem umlaufenden Rahmen der Palette zu befestigen, derart, dass sie mit einem gewissen Abstand oberhalb der Lochtafel der Palette verläuft, insbesondere etwa in der Höhe, die die oberen Enden der Hubstempel einnehmen, wenn sich die Hubstempel in der Beschichtungsposition befinden. Statt dessen kann die Membran aber auch auf der Lochtafel aufliegen und am Rand der Lochtafel durch Klemmleisten oder dergleichen befestigt sein, insbesondere, wenn mit horizontal verstellbaren Auflagerstempeln gearbeitet wird.

Eine zweckmäßige Weiterbildung der Erfindung besteht darin, dass die Membran aus einem durchsichtigen Material besteht. Dadurch kann man von oben durch die Membran hindurch erkennen, wo die Positionen der Auflagerbolzen sind und die Werkstücke dementsprechend positionieren. Außerdem hat die Durchsichtigkeit der Membran den Vorteil, dass bei Auflagersystemen mit horizontal verschiebbaren Bolzen von oben erkannt wird, welche Bolzen am Rand der Werkstücke vorstehen und dementsprechend weggeschoben werden müssen. Dieses Wegschieben kann trotz der Membran erfolgen, da sie aus einem hinreichend nachgiebigen Material, etwa aus Silikon, Kautschuk oder dergleichen besteht.

Da die Membran einem gewissen Verschleiß ausgesetzt ist, empfiehlt es sich, sie austauschbar zu befestigen. Wird die Membran an einer Palette montiert, so kann diese mehrteilig aufgebaut sein, so dass ein Austausch ohne großen Aufwand möglich ist.

Normalerweise ist die Palette ein separates Teil, das außerhalb der Pressvorrichtung mit den zu beschichtenden Werkstücken belegt und dann in die Pressvorrichtung eingelegt wird. Die Anwendung der erfindungsgemäßen Membran ist aber selbstverständlich auch dann möglich, wenn die Palette fester Bestandteil der Pressvorrichtung ist.

Es ist üblich, den Beschichtungsvorgang dadurch zu begünstigen, dass der Raum unter der Folie an Unterdruck angeschlossen wird, so dass sich die Folie besser an die Werkstückkanten anlegt. Damit dieses Prinzip auch bei Paletten mit integrierter Membran angewendet werden kann, empfiehlt es sich, den Unterdruck-Anschluss der Palette so vorzunehmen, dass die Unterdruckbeaufschlagung in dem Raum unterhalb der Membran stattfindet und dass die Membran Öffnungen aufweist. Dadurch wird die Folie selbst an die Werkstückkanten herangesaugt und die Membran kann nicht vorauseilen.

Weitere Merkmale und Vorteile der Erfindung ergeben sich aus der nachfolgenden Beschreibung eines Ausführungsbeispieles anhand der Zeichnung; dabei zeigt
- Figur 1: eine erfindungsgemäße Vorrichtung zur Beschichtung von Werkstücken in schematischer Seitenansicht;
- Figur 2: eine Auflagereinrichtung als Teil der Vorrichtung aus Figur 1 in schematischer Seitenansicht;
- Figur 3: die Auflagereinrichtung aus Figur 2 während des Beschichtungsvorganges;
- Figur 4: einen vergrößerten Ausschnitt aus Figur 3.

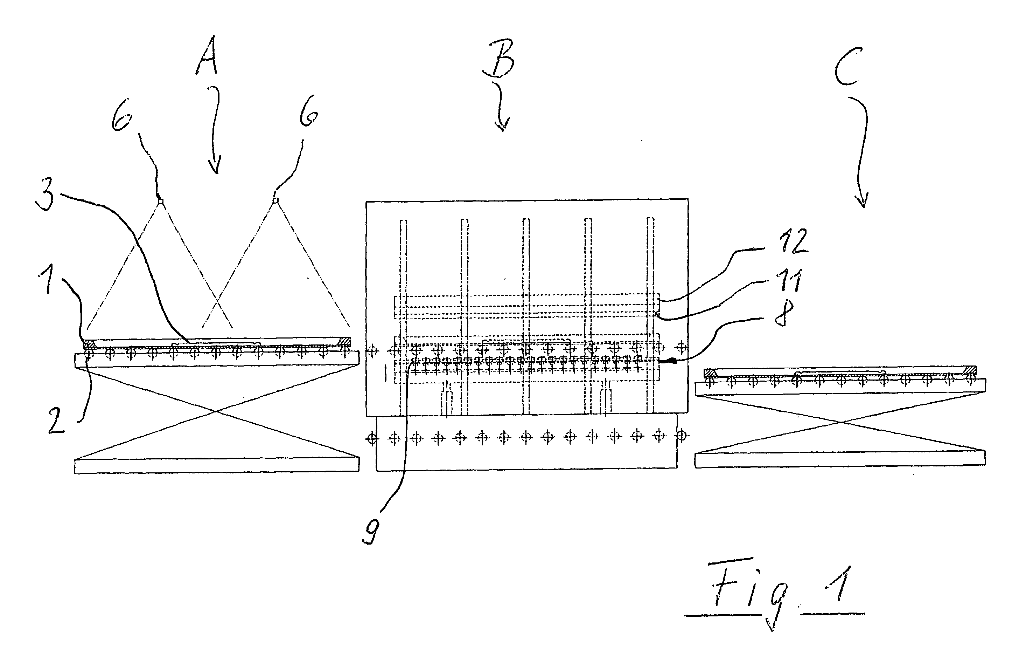

In Figur 1 erkennt man drei Stationen, die ein zu beschichtendes Werkstück durchläuft, und zwar einen in Figur 1 links angeordneten Legeplatz A, eine in Bildmitte angeordnete Beschichtungspresse B und eine rechts angeordnete Entleerungsstation C. Innerhalb des Legeplatzes A liegt eine Palette 1 mit einer Lochtafel auf einer Transportvorrichtung 2 in Form einer Rollenbahn und trägt ein zu beschichtendes Werkstück in Form eines plattenförmigen Möbelteils 3. Dieses Möbelteil soll an seiner Oberseite, die beliebig profiliert sein kann, und an seinen vier Seitenflächen - also an allen Seiten mit Ausnahme der Unterseite - beschichtet werden. Tatsächlich versucht man - im Gegensatz zur Darstellung in Figur 1 - auf der Palette 1 eine Vielzahl von nebeneinander liegenden Werkstücken, zur gleichzeitigen Beschichtung anzuordnen, um die Kapazität der Palette wie auch der Beschichtungspresse weitestmöglich auszunützen. Die Möbelteile müssen dabei untereinander einen gewissen Abstand aufweisen, damit die Folie auch an die Seitenflächen der Werkstücke angelegt werden kann.

Im oberen Bereich des Legeplatzes A ist eine aus mehreren optischen Sensoren bestehende Abtastvorrichtung 6 vorgesehen, die die Form, die Abmessungen und die Position der einzelnen Werkstücke 3 erfasst und an eine nicht dargestellte Steuervorrichtung weitergibt, um nachfolgend näher erläuterte Hubbolzen 9 in der Beschichtungspresse B zu steuern. Nach dem Abtastvorgang wird eine Folie über die Palette und die darin befindlichen Werkstücke gelegt und die Palette in die Beschichtungspresse B verfahren.

Der Transportvorgang vom Legeplatz A in die Presse B erfolgt über die Transportvorrichtung 2, etwa eine Rollenbahn, die die Palette 1 so in der Presse positioniert, dass das Lochbild in der Palette 1 - also die Öffnungen 4 in der Lochtafel 1a der Palette - exakt oberhalb der Hubbolzen 9 in der Presse zum liegen kommt. Dabei entspricht die Form und Position der Öffnungen 4 dem Raster der Hubbolzen 9.

Bevor die Palette 1 nach unten auf eine die Hubbolzen tragende Grundplatte 5 der Presse abgesenkt wird, um die Werkstücke auf die Hubbolzen aufzulegen, werden nur diejenigen Hubbolzen nach oben in die Beschichtungsposition ausgefahren, die vollständig von einem Werkstück überdeckt werden. Solche Hubbolzen hingegen, die unbelegt bleiben oder die nur teilweise von einem Werkstück überdeckt werden, bleiben in ihrer unteren Position. Diese Selektion der Hubstempel-Position erfolgt mit Hilfe der eingangs genannten Abtastvorrichtung 6, die die Form, Abmessungen und Position der einzelnen Werkstücke auf der Palette erfasst und daraus ein Legebild erstellt. Dieses Legebild wird in einem Rechner mit dem Raster der Hubbolzen 9 verglichen, worauf die Steuervorrichtung die Hubbolzen 9 in der gewünschten Weise ansteuert.

Es spielt dabei keine Rolle, ob zunächst alle Hubbolzen 9 in ihrer oberen Position stehen und die unbelegten oder nur teilweise belegten Hubstempel abgesenkt werden oder ob zunächst alle Hubstempel in der unteren Position stehen und danach nur die vollständig belegten Hubstempel hochfahren.

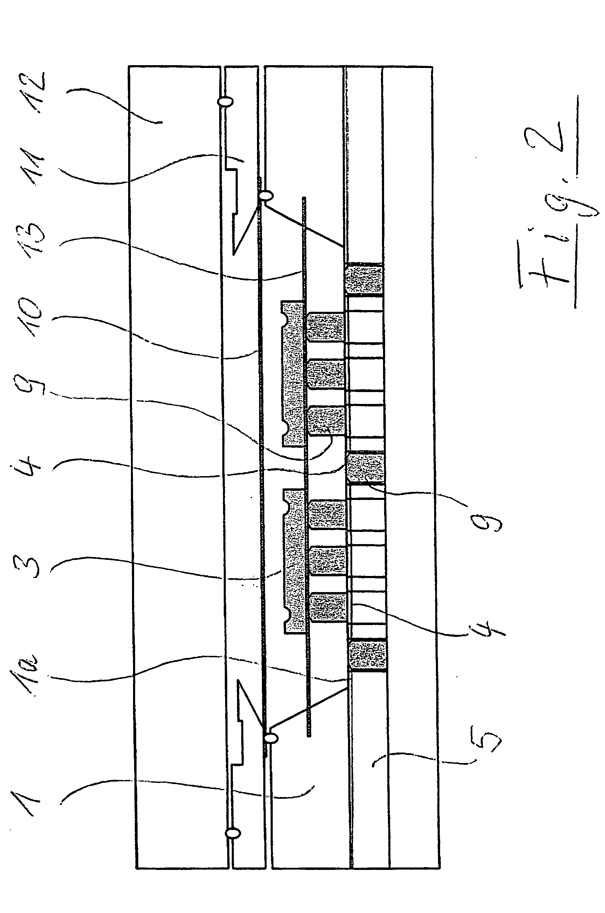

Wie die Figuren 2 bis 4 weiter zeigen, trägt die Palette 1 an der Oberseite ihres umlaufenden Rahmens die Folie 10, mit der die Werkstücke 3 beschichtet werden sollen. Die Folie wird in der Presse durch einen Dichtrahmen 11, der von oben gegen die Palette gedrückt wird, gegenüber der Umgebung abgedichtet. Oberhalb des Dichtrahmens 11 befindet sich eine vertikal verfahrbare Heizplatte 12, um die Folie auf die erforderliche Beschichtungstemperatur zu erhitzen. Der Dichtrahmen 11 und die Heizplatte 12 werden nach dem Installieren der Palette 1 in der Presse auf die in Figur 2 dargestellte Position abgesenkt und danach wird die Oberseite der Folie 10 mit Überdruck, die Unterseite mit Unterdruck beaufschlagt. Stattdessen kann die Palette auch gegen den Dichtrahmen 11 und die Heizplatte 12 nach oben fahren. Insoweit entspricht der beschriebene Aufbau dem bekannten Stand der Technik.

Wesentlich ist nun, dass die Palette 1 eine flexible Membran 13 trägt, die sich horizontal über die gesamte Belegungsfläche der Palette erstreckt. Diese Membran ist im Ausführungsbeispiel im Rahmen der Palette festgelegt, sie kann aber ebenso gut an der Lochtafel 1a befestigt sein. Sie ist an ihrem äußeren Umfang fest in die Palette integriert und erstreckt sich zwischen der Lochtafel 1a und den Werkstücken 3.

Die Membran 13 ist so flexibel, dass sie in der Legestation auf die Lochtafel 1a durchhängt, so dass die Werkstücke 3 problemlos aufgelegt werden können. Da sie durchsichtig ist, können die Werkstücke dabei optimal gegenüber den Öffnungen 4 in der Lochtafel 1a ausgerichtet werden.

Erfolgt die Beschichtung nicht nur durch Überdruck in dem Raum oberhalb der Folie 10, sondern auch durch Unterdruck in dem Raum unterhalb der Membran 13, so wird eine Membran mit zahlreichen Durchtrittsöffnungen verwendet, damit sich der Unterdruck an die Unterseite der Folie 10 fortpflanzen kann.

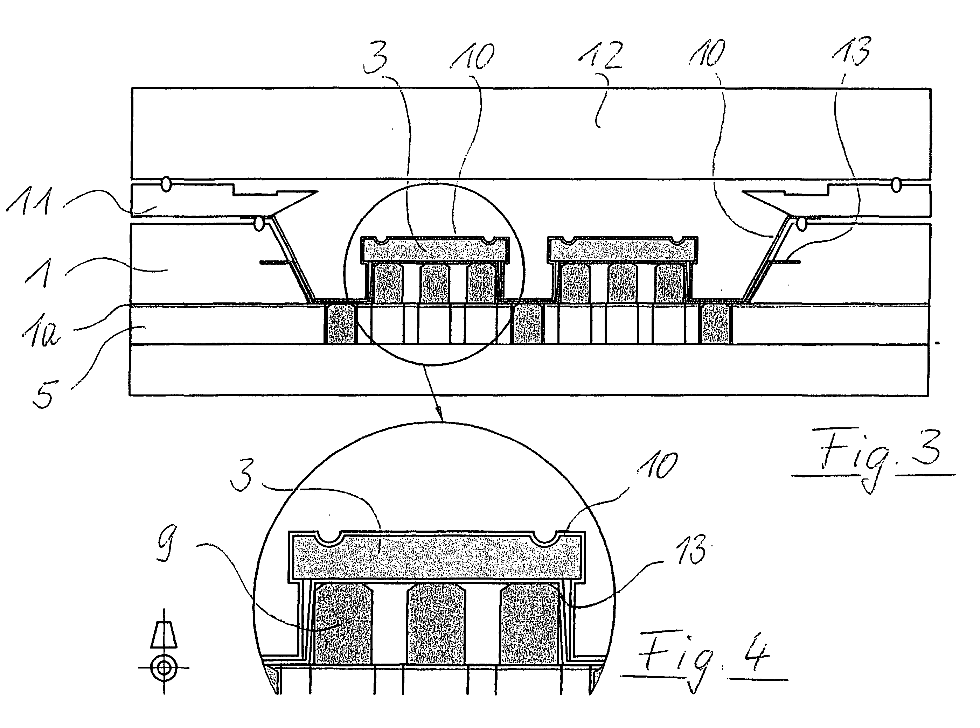

Das Beschichtungsergebnis selbst ist aus den Figuren 3 und 4 zu erkennen. Man sieht deutlich, wie sich die Folie nicht nur an die umlaufenden Seitenflächen der Werkstücke anlegt, sondern dass sie auch in den Freiraum oberhalb von unbelegten Stempeln eintaucht. Dieses Eintauchen ist mit einer starken Dehnung der Folie verbunden und speziell hier dient die Membran 13 zur Führung und Abstützung der Folie. Da die Membran dabei ebenfalls starker Dehnung unterworfen wird, baut sie entsprechende Stützkräfte auf und fungiert als Dehnungsbremse für die Folie. Folienrisse oder Folien-Ablösungen werden dadurch zuverlässig vermieden.

Nach dem Beschichten wird die Palette in die Entleerungsstation C verfahren, wo die beschichteten Werkstücke aus der zusammenhängenden Folie herausgeschnitten und vereinzelt werden.

Das erfindungsgemäße Prinzip der Stützmembran für die Beschichtung ist auch bei anderen Auflagersystemen einzusetzen, bei denen die Selektion der Auflagerbolzen nicht durch vertikales Verfahren, sondern beispielsweise durch horizontales Verschieben erfolgt. Ein derartiges Auflagersystem ist durch die EP-A-505 668 bekannt, wo die Bolzen zur Anpassung an verschiedene Werkstückformen und Werkstückgrößen parallel zur Auflagefläche verschoben oder verschwenkt werden können. Bezogen auf die vorliegende Figur 2 hat man sich dies so vorzustellen, dass alle Bolzen 9 in ein und derselben Ebene bleiben und horizontal so verschoben werden, dass sie alle unterhalb der zu beschichtenden Werkstücke konzentriert sind, so dass keine unbelegten oder nur teilweise belegten Hubstempel übrig bleiben. Hinsichtlich dieser horizontalen Verschiebbarkeit oder Verschwenkbarkeit wird in vollem Umfang auf die genannte EP-A-505 668 Bezug genommen. Die horizontale Verstellung der Stempel aus dem Werkstück-Randbereich kann von oben per Hand erfolgen, da die Membran genügend nachgiebig ist. - Die Abtastvorrichtung 6 erübrigt sich in diesem Fall.

## Patentansprüche

1. Pressvorrichtung zur mehrseitigen Beschichtung von Werkstücken, insbesondere von plattenförmigen Möbelteilen (3) an deren Oberseite und Seitenflächen, wobei die Werkstücke (3) auf einem Auflagersystem (5) nebeneinander liegen, das eine Vielzahl rasterartig verteilter Auflagerbolzen (9) aufweist, die zwischen einer Passivposition ohne Kontakt mit den Werkstücken (3) und einer die Werkstücke (3) tragenden Beschichtungsposition verstellbar sind,
**dadurch gekennzeichnet,**
**dass** oberhalb der Auflagerbolzen (9) eine elastische Membran (13) angeordnet ist, auf die die Werkstücke (3) auflegbar sind.

2. Vorrichtung nach Anspruch 1,
**dadurch gekennzeichnet,**
**dass** die Membran (13) an der Pressvorrichtung oder an einer entnehmbaren Palette (1) mit rasterartiger Lochtafel (1a) befestigt ist.

3. Vorrichtung nach Anspruch 2,
**dadurch gekennzeichnet,**
**dass** die Palette (1) einen Rahmen aufweist und die Membran (13) an ihrem Rand in diesem Rahmen befestigt ist.

4. Vorrichtung nach Anspruch 1,
**dadurch gekennzeichnet,**
**dass** die Membran (13) transparent ist.

5. Vorrichtung nach Anspruch 1,
**dadurch gekennzeichnet,**
**dass** die Membran (13) aus Silikon, Kautschuk oder dergleichen besteht.

6. Vorrichtung nach Anspruch 1,
**dadurch gekennzeichnet,**
**dass** die Membran (13) eine Dicke von ca. 0,5 mm bis 2 mm aufweist.

7. Vorrichtung nach Anspruch 2,
**dadurch gekennzeichnet,**
**dass** die Palette (1) insbesondere ihr Rahmen, zur Austauschbarkeit der Membran (13) mehrteilig aufgebaut ist.

8. Vorrichtung nach Anspruch 2,
**dadurch gekennzeichnet,**
**dass** die Palette (1) ein separates, in die Pressvorrichtung einlegbares Teil ist.

9. Vorrichtung nach Anspruch 2,
**dadurch gekennzeichnet,**
**dass** die Palette ein fester Bestandteil der Pressvorrichtung ist.

10. Vorrichtung nach Anspruch 2,
**dadurch gekennzeichnet,**
**dass** die Palette (1) einen Anschluss für Unterdruckbeaufschlagung des Raumes unterhalb der Membran (13) aufweist.

11. Vorrichtung nach Anspruch 1,
**dadurch gekennzeichnet,**
**dass** die Membran (13) gelocht ist.

12. Vorrichtung nach Anspruch 2,
wobei die Auflagerbolzen (9) zwischen einer unteren Ruheposition und einer oberen, die Lochtafel (1a) der Palette (1) durchquerenden und die Werkstücke (3) von der Lochtafel abhebenden Beschichtungsposition verstellbar sind,
**dadurch gekennzeichnet,**
**dass** die Membran (13) in unbelastetem Zustand mit Abstand oberhalb der Lochtafel (1a) der Palette (1) angeordnet ist.

13. Vorrichtung nach Anspruch 12,
**dadurch gekennzeichnet,**
**dass** der Abstand so gewählt ist, dass die Membran (13) etwa in Höhe der oberen Enden der Auflagerbolzen (9) verläuft, wenn sich die Auflagerbolzen (9) in ihrer oberen Beschichtungsposition befinden.

14. Entnehmbare Palette (1) für eine Pressvorrichtung gemäß einem der vorhergehenden Ansprüche, mit einer rasterartigen Lochtafel,
**dadurch gekennzeichnet,**
**dass** sie oberhalb ihrer Lochtafel (1a) eine elastische Membran (13) aufweist, auf die die Werkstücke (13) auflegbar sind.

## Claims

1. Press device for the multi-sided coating of workpieces, especially for coating panel-shaped furniture components (3) on their upper side and side faces, wherein the workpieces (3) lie one next to the other on a support system (5) having a plurality of support bolts (9) distributed in a grid-like manner, which support bolts are displaceable between a passive position in which they are not in contact with the workpieces (3) and a coating position in which they support the workpieces (3),
**characterised in that**
above the support bolts (9) there is arranged a resilient membrane (13) onto which the workpieces (3) are placeable.

2. Device according to claim 1,
**characterised in that**
the membrane (13) is attached to the press device or to a removable pallet (1) having a grid-like perforated board (1a).

3. Device according to claim 2,
**characterised in that**
the pallet (1) has a frame and the membrane (13) is attached at its edge in the frame.

4. Device according to claim 1,
**characterised in that**
the membrane (13) is transparent.

5. Device according to claim 1,
**characterised in that**
the membrane (13) consists of silicone, rubber or the like.

6. Device according to claim 1,
**characterised in that**
the membrane (13) has a thickness of about from 0.5 mm to 2 mm.

7. Device according to claim 2,
**characterised in that**
the pallet (1), especially its frame, is of multi-part construction to enable the membrane (13) to be exchanged.

8. Device according to claim 2,
**characterised in that**
the pallet (1) is a separate part which is insertable into the press device.

9. Device according to claim 2,
**characterised in that**
the pallet is a fixed component of the press device.

10. Device according to claim 2,
**characterised in that**
the pallet (1) has a connection for applying reduced pressure to the space below the membrane (13).

11. Device according to claim 1,
**characterised in that**
the membrane (13) is perforated.

12. Device according to claim 2,
wherein the support bolts (9) are displaceable between a lower rest position and an upper coating position in which they pass through the perforated board (1a) of the pallet (1) and lift the workpieces (3) away from the perforated board,
**characterised in that**
in its unladen state the membrane (13) is arranged above and spaced apart from the perforated board (1a) of the pallet (1).

13. Device according to claim 12,
**characterised in that**
the spacing is so chosen that the membrane (13) extends approximately at the height of the upper ends of the support bolts (9) when the support bolts (9) are in their upper coating position.

14. Removable pallet (1) for a press device according to any one of the preceding claims, having a grid-like perforated board,
**characterised in that**
above its perforated board (1a) the pallet has a resilient membrane (13) onto which the workpieces (3) are placeable.

## Revendications

1. Presse pour garnir d'un revêtement des pièces sur plusieurs faces, notamment des parties de meuble en forme de plaques (3) sur le dessus et sur les chants, sachant que les pièces (3) reposent côte à côte sur un système d'appuis (5) qui présente une multitude d'axes d'appui (9) répartis de manière à former un quadrillage, qui peuvent être déplacés entre une position passive sans contact avec les pièces (3) et une position d'application supportant les pièces (3), **caractérisée en ce qu'**au dessus des axes d'appui (9) est disposée une membrane élastique (13) sur laquelle les pièces (3) peuvent être posées.

2. Presse selon la revendication 1, **caractérisée en ce que** la membrane (13) est fixée à la presse ou à une palette amovible (1) dotée d'un panneau perforé formant un quadrillage (1a).

3. Presse selon la revendication 2, **caractérisée en ce que** la palette (1) présente un cadre, et **en ce que** la membrane (13) est fixée par son bord dans ledit cadre.

4. Presse selon la revendication 1, **caractérisée en ce que** la membrane (13) est transparente.

5. Presse selon la revendication 1, **caractérisée en ce que** la membrane est composée de silicone, de caoutchouc ou analogues.

6. Presse selon la revendication 1, **caractérisée en ce que** la membrane présente une épaisseur comprise entre 0,5 mm et 2 mm environ.

7. Presse selon la revendication 2, **caractérisée en ce que** la palette (1), notamment son cadre, est constitué(e) de plusieurs parties pour permettre le remplacement de la membrane (13).

8. Presse selon la revendication 2, **caractérisée en ce que** la palette (1) est un élément séparé pouvant être placé dans la presse.

9. Presse selon la revendication 2, **caractérisée en ce que** la palette (1) est un élément fixe de la presse.

10. Presse selon la revendication 2, **caractérisée en ce que** la palette (1) présente un raccord pour faire le vide dans l'espace situé sous la membrane (13).

11. Presse selon la revendication 1, **caractérisée en ce que** la membrane (13) est perforée.

12. Presse selon la revendication 2, sachant que les axes d'appui (9) peuvent être déplacés entre une position de repos basse et une position d'application haute dans laquelle ils traversent le panneau perforé (1a) de la palette (1) et soulèvent les pièces (3) dudit panneau perforé, **caractérisée en ce que** la membrane (13) non sollicitée se situe à distance au-dessus du panneau perforé (1a) de la palette (1).

13. Presse selon la revendication 12, **caractérisée en ce que** l'écart est choisi de telle manière que la membrane (13) s'étende approximativement à la hauteur des extrémités supérieures des axes d'appui (9) lorsque lesdits axes d'appui (9) se trouvent dans leur position d'application haute.

14. Palette amovible (1) pour une presse selon l'une des revendications précédentes, qui est dotée d'un panneau perforé formant un quadrillage, **caractérisée en ce qu'**au-dessus de son panneau perforé (1a), elle présente une membrane élastique (13) sur laquelle les pièces (3) peuvent être posées.
